# FASCICULE DE BREVET EUROPEEN

(11) **EP 3 890 576 B1**
(45) Date de publication et mention de la délivrance du brevet: **27.08.2025**
(21) Numéro de dépôt: 19809863.4
(22) Date de dépôt: 03.12.2019
(51) Int. Cl.: A47J 43/10, A47J 43/044, A47J 43/08, A47J 43/24

(54) **COUVERCLE POUR ARTICLE CULINAIRE COMPRENANT UN DISPOSITIF À CORDE À COMMANDE MANUELLE**
DECKEL FÜR KÜCHENGERÄT MIT MANUELL BETRIEBENER SEILVORRICHTUNG
LID FOR CULINARY APPARATUS COMPRISING A MANUALLY OPERATED ROPE DEVICE

(30) Priorité: 04.12.2018 FR 1872307
(43) Date de publication de la demande: 13.10.2021
(73) Titulaire: SEB S.A., 69130 Ecully (FR)
(72) Inventeur: BENOIT, David, 74540 GRUFFY (FR); PLICHON, Stéphane, 74350 ALLONZIER-LA-CAILLE (FR)
(74) Mandataire: SEB Développement
(86) Numéro de dépôt international: PCT/EP2019/083505
(87) Numéro de publication internationale: WO 2020/115047

(56) Documents cités:
- DE-A1- 102013 112 225
- US-A1- 2004 168 583
- US-A1- 2008 164 357
- US-A1- 2011 226 140
- US-A1- 2015 144 722
- US-B2- 9 901 216

## Description

Le domaine de l'invention est celui des enrouleurs de câbles à rappel automatique, actionnés manuellement, non électriques, permettant de transmettre un mouvement d'une pièce à une autre pièce par traction d'un câble ou d'une corde.

La présente invention concerne un dispositif d'entrainement à corde à commande manuelle et un appareil culinaire comprenant ce dispositif d'entrainement.

Il est à noter que, dans l'ensemble de ce document, les termes « longitudinal », « transversal », « horizontal », « vertical », « inférieur », « supérieur », « haut », « bas », « coaxial », « radial » employés pour décrire l'invention, font référence à cette invention en situation d'usage, lorsqu'elle est posée sur un plan horizontal. Le terme « coaxialement » au sens de l'invention, signifie que les pièces sont alignées sur un même axe, sans forcément passer par le centre géométrique des pièces.

Il est déjà connu des mécanismes d'entrainement à corde destinés à transmettre un mouvement de rotation à un objet ou une unité de travail. Ces mécanismes sont souvent mis en œuvre en tant que dispositif d'entrainement à main dans des appareils domestiques comme des appareils culinaires tels des essoreuses à salade, des hachoirs, des presse-purées, des extracteurs de jus ou des mélangeurs.

Il est connu du document US 2008/0164357 un appareil culinaire à corde à commande manuelle. Cet appareil permet de hacher les aliments en mettant en rotation des lames de coupe lorsque l'utilisateur tire sur la poignée reliée à la corde. Ce hachoir est muni d'un mécanisme d'entrainement à corde à commande manuelle disposé dans le couvercle de l'appareil. Le montage de ce mécanisme d'entrainement est complexe car les pièces du mécanisme coopèrent entres elles et le montage ne peut se faire que pendant l'assemblage du couvercle de l'appareil culinaire. En effet, le montage du mécanisme d'entrainement est dépendant de l'assemblage du couvercle de l'appareil culinaire. Tout d'abord, les parties supérieures et inférieures du couvercle coopèrent avec les pièces du mécanisme d'entrainement et font office de maintien du mécanisme d'entrainement. Une extrémité de la corde est connectée à la roue d'entrainement, le ressort de rappel est positionné sur la roue d'entrainement avec son extrémité externe attachée à la roue d'entrainement. Ce sous-ensemble est fixé au couvercle via l'extrémité interne du ressort. Ainsi la forme du couvercle est importante pour assurer la fixation d'une des extrémités du ressort, ce point fixe du ressort permet de mettre sous une tension adéquate le ressort par le déplacement de la corde. Le ressort de rappel est connecté au couvercle via son extrémité interne, ce qui assure un point fixe du ressort y compris pendant la rotation de la roue d'entrainement. Le ressort est connecté à la roue d'entrainement via son extrémité externe, ce qui assure un point mobile du ressort. Il faut donc que le couvercle présente dès sa conception des moyens pour maintenir fixe le ressort. Cette étape de mise en connexion du ressort avec le couvercle est réalisée par un opérateur de montage en usine. La corde doit être passée au travers du couvercle via le guide fil pour être assemblée avec la poignée, le guide fil étant nécessairement solidarisé avec le couvercle avant le passage de la corde. L'extrémité libre de la corde doit être fixée dans la poignée. A ce moment-là, seulement, il est possible d'enrouler la corde dans la gorge de la roue d'entrainement. Cette opération est toujours manuelle et non automatisable et rendue difficile dû au faible espace disponible dans le couvercle, la mise sous tension du ressort en effectuant les 2 tours supplémentaires de corde est réalisée dans le même temps manuellement.

Il est aussi connu du document US2011/226140 un couvercle d'appareil culinaire selon le préambule de la revendication 1.

Cependant l'assemblage de tels mécanismes d'entrainement dans le couvercle est fastidieux et complexe et ne peut être automatisé. En effet, la mise sous tension du ressort de rappel ne peut se faire que manuellement après la fixation de la poignée sur l'extrémité extérieur et libre de la corde. Il n'est donc pas possible de dissocier l'assemblage de l'appareil culinaire, de l'assemblage du mécanisme d'entrainement.

Le but de l'invention est de remédier aux inconvénients précités et de simplifier l'assemblage du mécanisme d'entrainement en fournissant un couvercle d'appareil culinaire selon la revendication 1 comprenant un dispositif d'entraînement à corde qui permet la création d' un sous-ensemble autonome. Le dispositif d'entraînement à corde du couvercle de la revendication 1 présente l'avantage de pouvoir s'adapter facilement à toutes les différentes formes et géométries de couvercles et être fabriqué de façon indépendante du reste du couvercle de l'appareil culinaire. Ainsi le dispositif d'entraînement à corde du couvercle de la revendication 1 est fabriqué en usine et le ressort de rappel est mis sous tension lors de la fabrication du dispositif. Ainsi le dispositif d'entraînement à corde du couvercle de la revendication 1 est prêt à fonctionner. Lors de l'assemblage du couvercle, la tension du ressort de rappel n'a plus besoin d'être ajustée puisqu'il est déjà sous tension. La tension du ressort de rappel est beaucoup plus simple à ajuster. L'accès au sous-ensemble est total car ce dernier n'est pas préassemblé dans le couvercle ce qui limiterait sa manipulation. Avantageusement, le couvercle de l'appareil culinaire n'a pas besoin de présenter dès sa conception des moyens pour maintenir fixe le ressort. De plus, le dispositif d'entraînement à corde du couvercle de la revendication 1 présente l'avantage d'être un sous-ensemble autonome, déplaçable d'un couvercle d'appareil culinaire à un autre, voir remplaçable ou réparable. En effet, il peut être envisagé de déplacer le dispositif d'entraînement à corde du couvercle de la revendication 1 d'un couvercle à un autre couvercle, en démontant le couvercle, d'un appareil culinaire sans qu'aucune action sur la tension de la corde ne soit nécessaire.

De plus le dispositif d'entraînement à corde du couvercle de la revendication 1 présente l'avantage d'intégrer le guide fil ou guide corde qui se place directement à la bonne position pour un assemblage plus rapide, voir automatisé, du dispositif selon l'invention.

Un autre avantage de l'invention est que le montage de la corde, et notamment la réalisation du nœud de retenue de la corde, peut être réalisé en usine lors de la fabrication du dispositif d'entraînement à corde du couvercle de la revendication 1. Ainsi la corde est nouée antérieurement à la mise en place du mécanisme dans le couvercle. Cette opération de nouage manuelle devient beaucoup plus simple que si elle devait s'effectuer lors de l'assemblage du couvercle.

Un autre avantage de l'invention est que le dispositif d'entraînement à corde du couvercle de la revendication 1 est conçu de façon à être fabriqué et être transporté indépendamment du reste du produit dans lequel il sera intégré, par exemple un appareil culinaire, tout en garantissant l'intégrité de l'assemblage ce qui représente une grande autonomie industrielle.

Un autre avantage de l'invention est que le dispositif d'entraînement à corde du couvercle de la revendication 1 est accessible et remplaçable en dévissant le couvercle sans que le ressort perde sa tension et ne sorte du dispositif. Le ressort reste sous tension, même quand le couvercle est démonté. Ceci peut être très avantageux pour nettoyer le couvercle dans un lave-vaisselle, en démontant au préalable le dispositif d'entrainement d'entraînement à corde du couvercle de la revendication 1 car la corde s'altère lors d'un passage au lave-vaisselle.

Un autre but de la présente invention est de remédier aux inconvénients mentionnés plus haut et de proposer un couvercle d'appareil culinaire comprenant un dispositif d'entraînement à corde à commande manuelle simple et indépendant.

L'invention a pour objet un couvercle pour article culinaire selon la revendication 1.

Avantageusement, le capot de guidage du dispositif d'entrainement peut comprendre une butée d'arrêt de la poignée. Ainsi la butée d'arrêt permet de stopper la course de la corde, notamment lors du retour de la corde qui est rappelée par la force de rappel du ressort de rappel. La butée peut être incorporée directement au dispositif d'entrainement, et par exemple peut faire partir intégrante du capot de guidage. Selon une variante, la butée d'arrêt forme l'une des extrémités du capot de guidage. Il peut être envisagé que la butée d'arrêt soit une pièce distincte du capot de guidage.

Avantageusement, le guide corde, recevant la corde, est agencé sur le capot de guidage dans un logement du capot de guidage.

Avantageusement, ce logement sert d'orifice de sortie de la corde et de guidage de la corde. Le guide corde est agencé dans le logement du capot de guidage qui est destiné à recevoir le guide corde. Le logement du capot de guidage présente une forme complémentaire à celle du guide corde de manière à recevoir le guide corde.

Avantageusement, le logement du capot de guidage du dispositif d'entrainement est intégré à la butée d'arrêt

Avantageusement, la poignée du dispositif d'entrainement est en contact seulement avec le guide corde et/ou avec la butée d'arrêt en phase de repos du dispositif d'entrainement. La phase de repos est la phase où la corde est enroulée autour de la roue d'entrainement, la corde est rétractée à son maximum et l'opérateur ne manipule pas le dispositif d'entrainement. Dans cette phase de repos, selon une première variante la poignée touche seulement le guide corde, dans une seconde variante la poignée touche seulement la butée d'arrêt, dans une troisième variante la poignée touche simultanément le guide corde et la butée d'arrêt. Dans la première variante, le guide corde est saillant par rapport au logement du capot de guidage, ainsi la poignée n'entre pas en contact avec le capot de guidage dans la phase de repos. Dans la seconde variante, le guide corde n'est pas saillant du logement du capot de guidage mais inséré dans le logement du capot de guidage. Ainsi la poignée entre en contact avec la butée d'arrêt du capot de guidage dans la phase de repos. Dans la troisième variante, le guide corde n'est pas saillant du logement du capot de guidage mais bord à bord avec le logement du capot de guidage. Ainsi la poignée entre en contact avec la butée d'arrêt du capot de guidage et le guide corde dans la phase de repos.

Avantageusement, le guide corde du dispositif d'entrainement forme une pièce distincte de la butée d'arrêt. Lorsque la corde effectue un mouvement de va et vient, les frottements occasionnés contre les pièces rencontrées par la corde, comme le capot de guidage génèrent de la chaleur. Aussi afin de protéger celles-ci de l'échauffement, un guide corde est agencé sur le capot de guidage. Avantageusement, le guide corde a la forme d'une bague ou d'un anneau cylindrique avec un espace intérieur circonscrit par les parois de la bague ou de l'anneau permettant le passage de la corde. Avantageusement le guide corde peut être en laiton, en céramique ou en métal, ou tout matériau qui en contact avec la corde ne sera pas altéré par l'échauffement de la corde, provenant des frottements de celle-ci lors de son déplacement. Ainsi le guide corde devra être en matériau résistant à l'échauffement de la corde.

La corde peut être nommée câble, chaîne de traction, courroie, et peut être en matière naturelle, métallique ou plastique.

Selon l'invention, le guide corde du dispositif d'entrainement est amovible. Avantageusement le guide corde peut être désolidarisé du capot de guidage par simple pression, par exemple manuelle, opérée par un opérateur. Selon une variante, le guide corde n'est pas solidaire du capot de guidage et peut être inséré ou retiré dans le logement du capot de guidage par simple pression, par exemple manuelle, ce qui facilite l'assemblage.

Selon l'invention, le capot de guidage du dispositif d'entrainement comprend un élément de déportation pour éloigner la poignée dans une direction radiale par rapport à l'axe de rotation et mettre sous tension la corde dans une direction radiale par rapport à l'axe de rotation. Cet élément de déportation est disposé transversalement par rapport à l'axe de rotation et permet de recevoir la corde. Il permet avantageusement de tenir la corde tendue dans une direction radiale par rapport à l'axe de rotation. Avantageusement, cet élément de déportation comprend un logement où vient se loger la corde. Il peut être envisagé que l'élément de déportation soit suffisamment étroit pour guider la corde. Avantageusement, cet élément de déportation fait partie intégrante du capot de guidage. Dans ce cas, le capot de guidage et l'élément de déportation ne forment qu'une seule pièce. Il peut aussi être envisagé que l'élément de déportation forme une pièce distincte par rapport au capot de guidage.

Avantageusement, la butée d'arrêt du capot de guidage du dispositif d'entrainement fait partie de l'élément de déportation. Selon une variante, la butée d'arrêt forme l'une des extrémités de l'élément de déportation. Avantageusement, il peut être envisagé que la butée d'arrêt soit une pièce distincte de l'élément de déportation et du capot de guidage.

Avantageusement, la roue d'entrainement du dispositif d'entrainement peut comprendre un premier point d'ancrage d'une première extrémité du ressort de rappel. Ce premier point d'ancrage généralement localisé sur la roue permet de fixer le ressort en coopération avec le second point d'ancrage localisé sur le capot de guidage. Avantageusement le ressort de rappel est un ruban de section rectangulaire, généralement élastique, en métal ou acier trempé, enroulé autour de l'axe de rotation sur la roue d'entrainement dans une cavité. Il s'agit généralement, d'un ressort spiral. Le ruban élastique s'enroule dans la cavité en prenant la forme d'un rouleau à spires jointives. Le plan d'enroulement du ressort de rappel est disposé perpendiculairement à l'axe de rotation. Le premier point d'ancrage situé au niveau de la roue d'entrainement permet de fixer le ressort et de l'enrouler autour de l'axe de rotation. Une fois maintenu dans la cavité, le ressort est pré tendu, c'est-à-dire sous une certaine tension.

Avantageusement, le ressort de rappel du dispositif d'entrainement comprend un premier point de fixation qui coopère avec le premier point d'ancrage, ce premier point de fixation est généralement à une extrémité du ressort, en particulier l'extrémité externe du ressort.

Avantageusement, le capot de guidage du dispositif d'entrainement peut comprendre un second point d'ancrage d'une seconde extrémité du ressort. Ce second point d'ancrage généralement localisé sur le capot de guidage permet d'immobiliser l'extrémité interne du ressort. Ainsi, le ressort de rappel ou ressort moteur ou ressort de barillet pourra emmagasiner de l'énergie lorsqu'il est tendu ou sous tension, et la restituer lors de la détente (restitution du couple). L'énergie restituée est généralement transmise à l'unité de travail.

Avantageusement, le ressort de rappel du dispositif d'entrainement peut comprendre un second point de fixation qui coopère avec le second point d'ancrage, ce second point de fixation est généralement à une extrémité du ressort, en particulier l'extrémité interne du ressort.

Le dispositif d'entrainement du couvercle selon la revendication 1 comprend une roue d'entrainement.

Avantageusement, la roue d'entrainement du dispositif d'entrainement comprend une gorge pour recevoir la corde. Avantageusement, cette roue d'entrainement est un tambour enrouleur comprenant une gorge où vient se loger la corde en s'enroulant autour de l'axe de rotation.

Avantageusement, la roue d'entrainement du dispositif d'entrainement peut comprendre une cavité destinée à recevoir le ressort de rappel. Avantageusement, la cavité est disposée de manière à placer le ressort de rappel transversalement à l'axe de rotation. Avantageusement, la cavité se présente sous une forme complémentaire de celle du ressort pré-tendu, comme par exemple la forme d'un cylindre.

Avantageusement, la corde est enroulée dans la gorge de la roue d'entrainement, dans le sens anti-horaire par rapport à l'axe de rotation et le ressort de rappel est disposé dans la cavité de la roue d'entrainement enroulé dans le sens horaire par rapport à l'axe de rotation. Il peut être envisagé que la corde soit enroulée dans la gorge de la roue d'entrainement, dans le sens horaire par rapport à l'axe de rotation et le ressort de rappel soit disposé dans la cavité de la roue d'entrainement enroulé dans le sens anti-horaire par rapport à l'axe de rotation.

Avantageusement, la roue d'entrainement du dispositif d'entrainement est mobile en rotation par rapport au capot de guidage. Avantageusement, le capot de guidage peut être fixe par rapport à la roue d'entrainement du dispositif d'entrainement. set

Avantageusement, la roue d'entrainement du dispositif d'entrainement peut comprendre un moyen pour permettre l'accouplement mécanique de l'unité de travail afin de transmettre le mouvement de rotation. Ce moyen peut présenter une forme spécifique mâle ou femelle destinée à transmettre le mouvement.

Avantageusement, la roue d'entrainement du dispositif d'entrainement peut comprendre un espace du côté inférieur pour la réception par accouplement mécanique de l'unité de travail afin de transmettre le mouvement de rotation. Avantageusement cet espace du côté inférieur de la roue d'entrainement présente une section de forme hexagonale. Avantageusement cet espace du côté inférieur de la roue d'entrainement présente une forme de cylindre de section hexagonale. Avantageusement, cet espace permet de recevoir un arbre d'entrainement et de coopérer avec cet arbre d'entrainement pour transmettre un mouvement de rotation.

Selon l'invention, le dispositif d'entraînement à corde du couvercle de la revendication 1 est disposé coaxialement par rapport à l'axe de rotation A entre la partie supérieure et la partie inférieure du couvercle.

Avantageusement, la poignée du dispositif n'est jamais en contact avec ces parties supérieure ou inférieure dans la phase de repos du dispositif d'entrainement. Le terme « coaxialement » au sens de l'invention, signifie que les pièces sont alignées sur le même axe, sans forcément passer par le centre géométrique des pièces.

Avantageusement, le dispositif peut comprendre une bride de maintien. Ainsi le dispositif forme un enrouleur à câble autonome, transportable et manipulable. Il est à noter que la bride de maintien n'a pas pour fonction de garder le ressort sous-tension mais de garantir l'intégrité de l'assemblage et d'éviter que les pièces du dispositif selon l'invention se désassemblent lors des manipulations du dispositif. La bride de maintien possède avantageusement des éléments de fixation qui coopèrent avec le capot de guidage et avec l'espace d'accouplement mécanique de la roue d'entrainement, maintenant l'ensemble des pièces du dispositif

L'invention a également pour objet un appareil culinaire comprenant le couvercle selon l'invention. Il peut par exemple s'agir d'essoreuses à salade, de hachoirs, de presse-purées, d'extracteurs de jus ou de mélangeurs ou tout autre appareil nécessitant un enrouleur de câble à rappel automatique, actionné manuellement, non électrique, permettant de transmettre un mouvement d'une pièce à une autre pièce par traction d'un câble ou d'une corde.

On comprendra mieux les buts, aspects et avantages de la présente invention, d'après la description donnée ci-après de modes particuliers de réalisation de l'invention présentés à titre d'exemples non limitatifs, en se référant aux dessins annexés dans lesquels :
[Fig 1] la figure 1 est une vue en perspective d'un appareil culinaire selon l'invention, de type hachoir, comprenant un dispositif d'entrainement dans sa phase de repos, le dispositif est logé dans le couvercle de l'appareil selon l'invention
[Fig 2] la figure 2 est une vue en perspective de l'appareil de la figure 1 présentant la corde en extension.
[Fig 3] la figure 3 est une vue éclatée en perspective de l'appareil de la figure 1.
[Fig 4] la figure 4 est une vue éclatée en perspective d'un dispositif d'entrainement selon un mode particulier de réalisation.
[Fig 5] la figure 5 est une vue éclatée de côté du dispositif de la figure 4.
[Fig 6] la figure 6 est une vue en perspective de dessous du capot de guidage du dispositif de la figure 4.
[Fig 7] la figure 7 est une vue en perspective de dessous du capot de guidage, du guide corde, du ressort de rappel et de la corde du dispositif de la figure 4.
[Fig 8] la figure 8 est une vue partielle en perspective de dessous du dispositif de la figure 4.
[Fig 9] la figure 9 est une vue en perspective et en coupe du dispositif de la figure 4.
[Fig 10] la figure 10 est une vue en coupe et de côté du dispositif de la figure 4.
[Fig 11] la figure 11 est une vue en coupe et en perspective de la roue d'entrainement et de la corde du dispositif de la figure 4.
[Fig 12] la figure 12 est une vue en coupe et en perspective de la roue d'entrainement, de la corde et du guide corde du dispositif de la figure 4.
[Fig 13] la figure 13 est une vue en coupe et en perspective de la roue d'entrainement, de la corde, du guide corde et d'une partie de la poignée du dispositif de la figure 4.
[Fig 14] la figure 14 est une vue en coupe et en perspective de la roue d'entrainement, de la corde, du guide corde et de la poignée du dispositif de la figure 4.
[Fig 15] la figure 15 est une vue en perspective de la roue d'entrainement, de la corde, du guide corde, de la poignée et du ressort de rappel avec ses points de fixation du dispositif de la figure 4.
[Fig 16] la figure 16 est une vue de dessus de la figure 15.
[Fig 17] la figure 17 est une vue en perspective de la roue d'entrainement, de la corde, du guide corde, de la poignée, du ressort de rappel et du capot de guidage du dispositif de la figure 4.
[Fig 18] la figure 18 est une vue en perspective de dessous du dispositif de la figure 17.
[Fig 19] la figure 19 est une vue de dessus du dispositif dont le montage est terminé.
[Fig 20] la figure 20 est une vue de dessous du dispositif dont le montage est terminé.
[Fig 21] la figure 21 est une vue en perspective du dispositif dont le montage est terminé.
[Fig 22] la figure 22 est une vue en perspective du dispositif dont le montage est terminé avec sa bride de maintien.
[Fig 23] la figure 23 est une vue en perspective du dispositif dont le montage est terminé avec sa bride de maintien maintenant le dispositif.

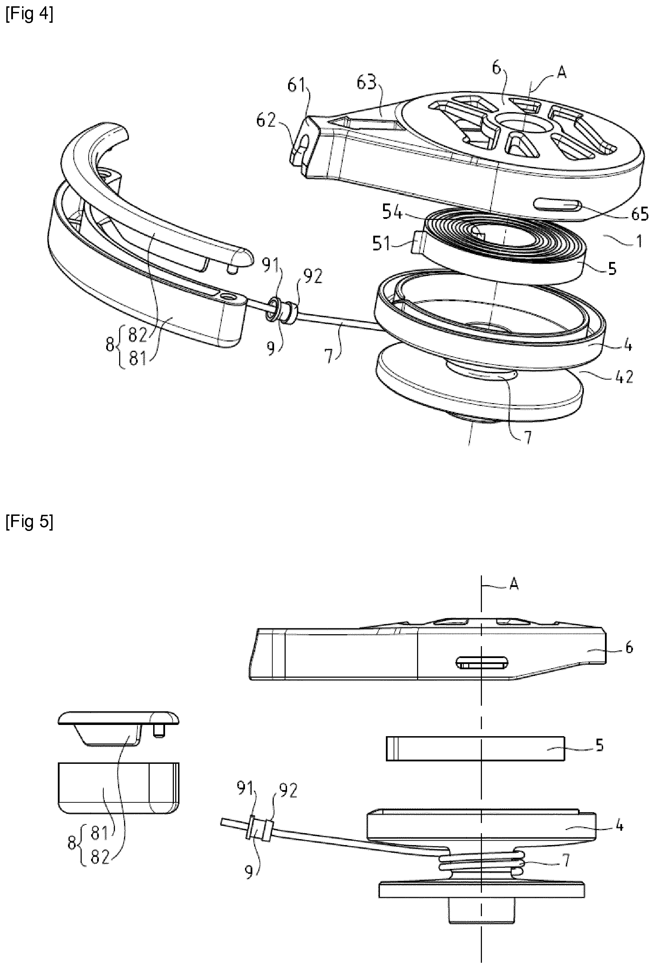

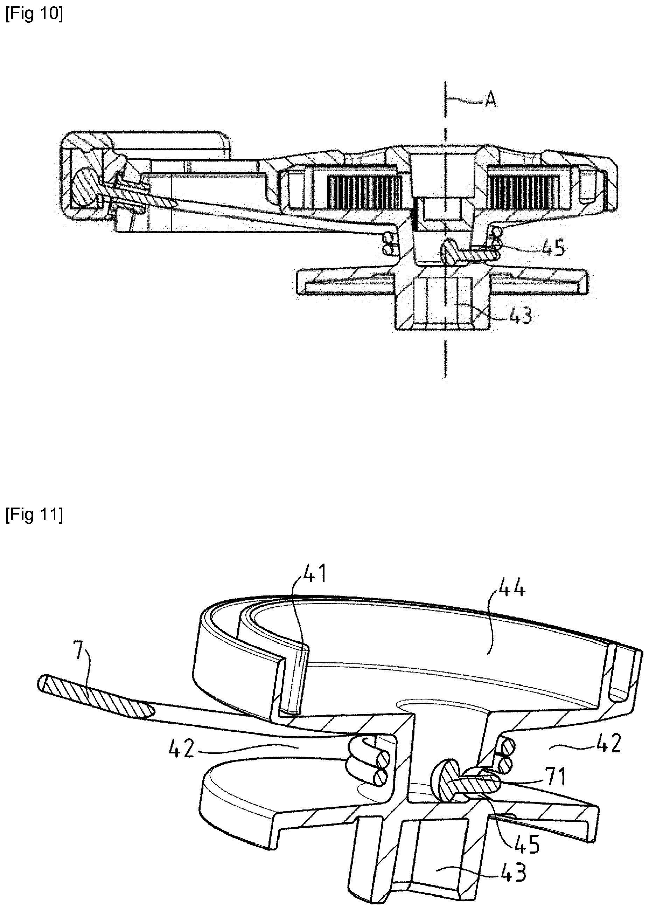

Les figures 11 à 23 illustrent les étapes de montage du dispositif de la figure 4.

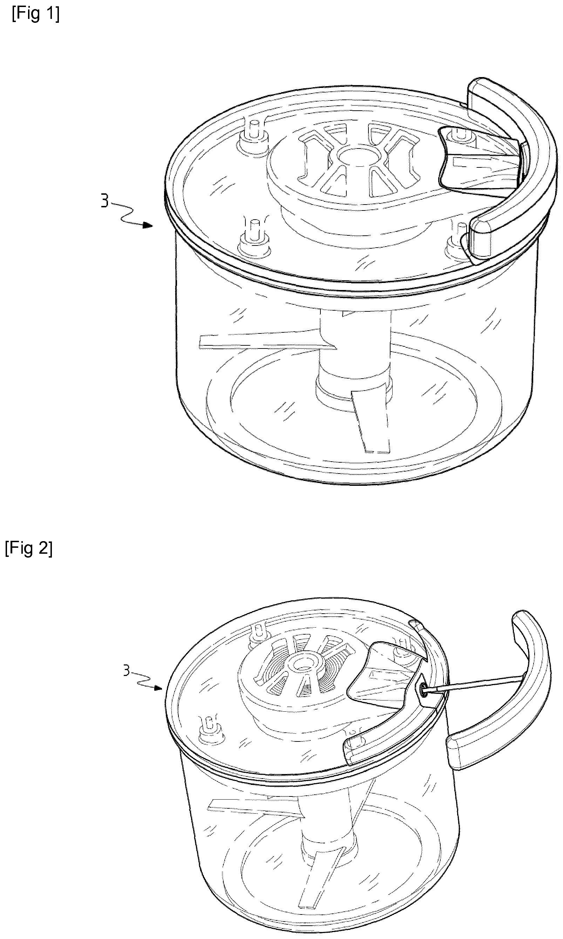

La figure 1 représente un appareil culinaire 3 selon l'invention qui est un hachoir et dont l'unité de travail 2 comprend des lames de coupes. L'appareil culinaire 3 comprend un couvercle intégrant un dispositif d'entrainement qui est représenté dans sa phase de repos, c'est-à-dire qu'il n'y a pas d'énergie transmise pour générer un mouvement. Le dispositif d'entrainement est logé dans le couvercle de l'appareil selon l'invention. Le ressort de rappel est présent dans l'appareil culinaire 3 mais non représenté à la figure 1.

La figure 2 représente le même appareil culinaire 3 qu'à la figure 1 représenté dans une de ses situations d'usage avec la poignée tirée et la corde déroulée et tendue.

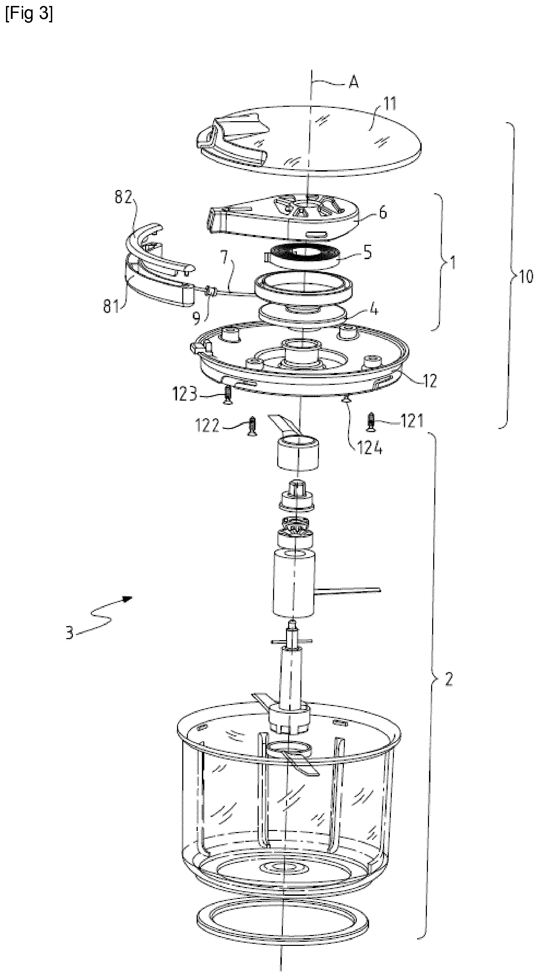

La figure 3 est une vue éclatée en perspective de l'appareil de la figure 1. La partie 2 représente l'unité de travail avec un bol à l'intérieur duquel se trouvent des lames de coupe disposées coaxialement par rapport à l'axe de rotation A avec l'arbre d'entrainement selon l'axe de rotation A. L'arbre d'entrainement coopère avec le couvercle 10. Le couvercle 10 comprend une partie supérieure 11 et une partie inférieure 12. A l'intérieur du couvercle 10 est logé un dispositif 1 d'entrainement. Les parties supérieure 11 et inférieure 12 sont fixées l'une à l'autre par vissage des vis 121, 122, 123 et 124. La quatrième vis 124 est partiellement visible sur la figure 3. Le dispositif 1 d'entrainement comprend une roue d'entrainement 4 ayant la même fonction que le tambour d'un treuil, sur laquelle vient s'enrouler une corde 7 transversalement à l'axe de rotation A. La roue d'entrainement reçoit un ressort 5 de rappel qui est un ressort spiral. Le dispositif 1 d'entrainement comprend un capot de guidage 6 qui maintient le ressort spiral et oriente la corde 7 dans une direction transversale à l'axe de rotation A. Le capot de guidage 6 comprend sur sa partie supérieure des évidements qui permettent de laisser apparaître le ressort 5 de rappel et qui sont généralement esthétiques et facultatifs. Le dispositif 1 d'entrainement comprend un guide corde 9 en laiton ayant la forme d'une bague et monté de manière à laisser coulisser la corde. Lors du fonctionnement de l'appareil, le guide corde est fixe et c'est la corde qui coulisse en passant au travers du guide corde. Le dispositif 1 d'entrainement comprend une poignée 8, comprenant 2 pièces, une base 81 de la poignée et un capot 82 de la poignée.

La figure 4 représente une vue éclatée en perspective du dispositif 1 d'entrainement. Le capot de guidage 6 est disposé transversalement à l'axe de rotation A. Le capot de guidage 6 comprend un élément 63 de déportation qui n'est pas disposé coaxialement avec l'axe de rotation A mais se trouve déporté par rapport à l'axe de rotation A. L'élément 63 de déportation permet d'éloigner la position d'arrêt de la corde par rapport à l'axe de rotation A et d'allonger dans un plan transversal par rapport à l'axe de rotation A le capot de guidage 6. L'élément 63 de déportation est facultatif et pourrait être supprimé ainsi la position d'arrêt de la corde serait au plus près de l'axe de rotation A. Le capot de guidage 6 comprend une butée d'arrêt 61 qui stoppe la course retour de la corde quand elle est rappelée par le ressort 5 de rappel. Il s'agit d'une surface plane disposée transversalement à la course de la corde. Le capot de guidage 6 comprend un logement 62 capable de recevoir le guide corde 9. Le logement 62 présente la forme d'un trou de serrure qui est complémentaire à la forme du guide corde, ce qui permet au guide corde 9 de se loger dans le logement 62. Le guide corde 9 comprend 2 rebords, un rebord 91 antérieur et un rebord 92 postérieur par rapport à la distance de l'axe de rotation A. Les rebords 91 et 92 permettent d'immobiliser le guide corde dans son logement 62 dans une direction transversale à l'axe de rotation A et permettent de laisser mobile le guide corde 9 dans la même direction que l'axe de rotation A. Les rebords 91 et 92 permettent au guide corde 9 de se maintenir en place lors du va et vient de la corde 7, sans être entrainé par le mouvement de la corde. Le dispositif 1 d'entrainement comprend une poignée 8, comprenant 2 pièces, la base 81 de la poignée et le capot 82 de la poignée. La poignée 8 a une forme courbe venant épouser la forme ronde du couvercle 10. Le ressort 5 de rappel est enroulé autour de l'axe de rotation A.

La figure 5 représente une vue éclatée de côté du dispositif de la figure 4. Le capot de guidage 6 est disposé transversalement à l'axe de rotation A. Le ressort 5 de rappel est disposé entre le capot de guidage et la roue d'entrainement. Le capot de guidage 6, le ressort 5 de rappel et la roue d'entrainement 4 sont disposés dans des plans parallèles, ces plans parallèles étant tous transversaux à l'axe de rotation A.

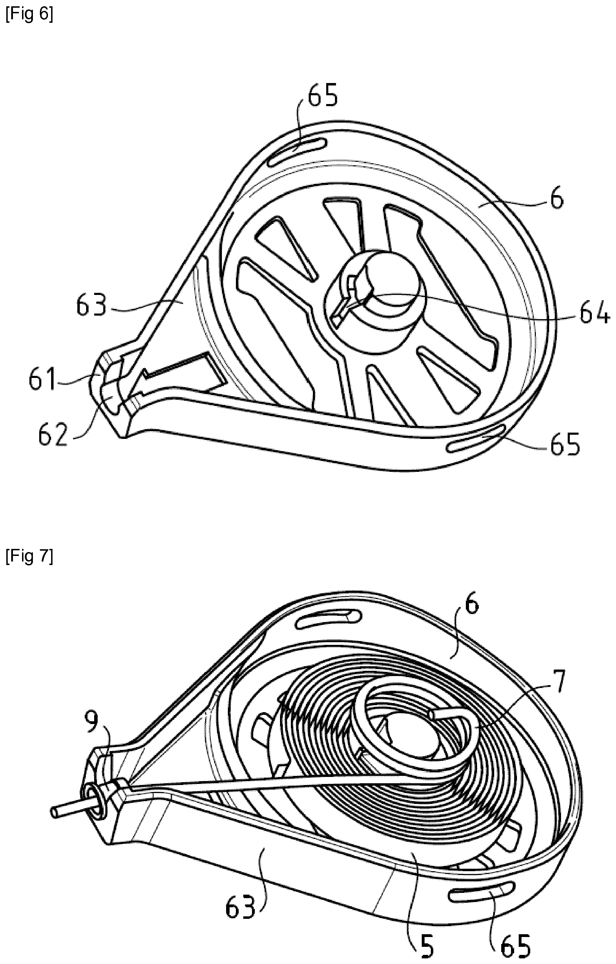

La figure 6 est une vue en perspective de dessous du capot de guidage du dispositif de la figure 4. Le capot de guidage présente un point d'ancrage 64 du ressort 5 de rappel. Ce point d'ancrage 64 maintient fixe l'extrémité 54 du ressort 5 de rappel qui est l'extrémité interne du ressort.

La figure 7 est une vue en perspective de dessous du capot de guidage 6, du guide corde 9, du ressort 5 de rappel et de la corde 7 du dispositif de la figure 4. Le capot de guidage 6 comprend un élément 63 de déportation qui éloigne la position d'arrêt de la corde par rapport à l'axe de rotation A.

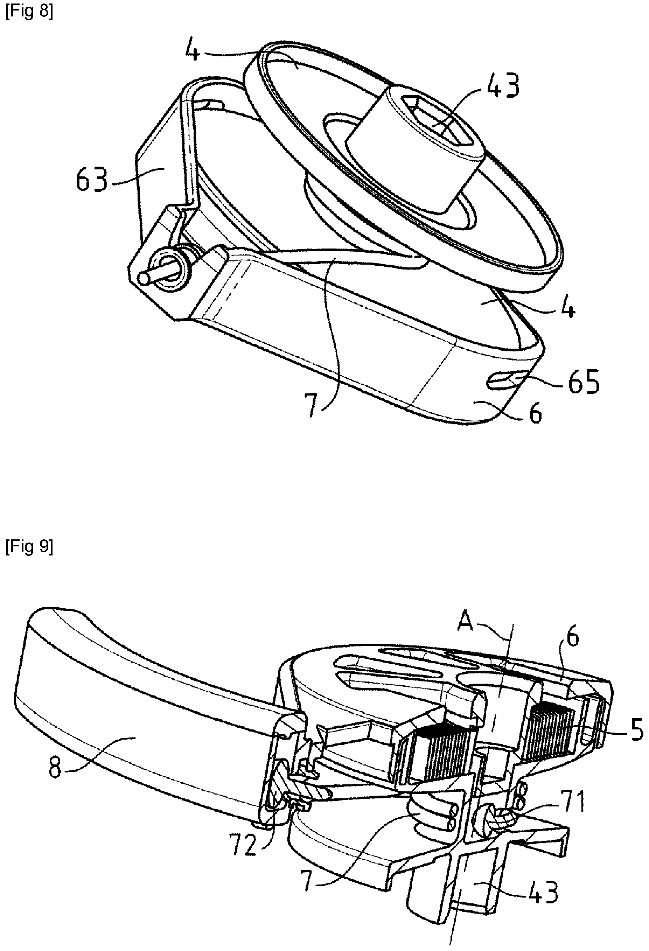

La figure 8 est une vue partielle en perspective de dessous du dispositif de la figure 4. La roue d'entrainement 4 comprend un espace 43 du côté inférieur pour la réception par accouplement mécanique de l'unité de travail 2 afin de transmettre le mouvement de rotation. Cet espace 43 se présente sous la forme d'un cylindre creux dont la section est hexagonale. Cet espace 43 coopère avec un élément complémentaire de l'unité de travail 2 pour transmettre l'énergie mécanique de rotation et entrainer un arbre de transmission.

La figure 9 est une vue en perspective et en coupe du dispositif de la figure 4. Le ressort 5 de rappel est un ressort spiral dont les spires sont jointives, et est disposé coaxialement avec l'axe de rotation A. Ce ressort spiral est un ruban de section rectangulaire, en acier inoxydable trempé, qui est enroulé autour de l'axe de rotation sur la roue d'entrainement 4.

La figure 10 est une vue en coupe et de côté du dispositif de la figure 4.

Les figures 11 à 23 illustrent les étapes de montage du dispositif de la figure 4.

La figure 11 est une vue en coupe et en perspective de la roue d'entrainement et de la corde du dispositif de la figure 4. La première étape de montage du dispositif est la formation d'un premier nœud 71 à une des extrémités de la corde 7. Puis l'autre extrémité de la corde (non nouée) est insérée dans un trou de corde 45. Le trou de corde 45 présente une section dont l'aire est inférieure à l'aire de la plus petite section du nœud 71. La corde 7 est tirée jusqu'à ce que le nœud 71 soit retenu par les parois entourant le trou de corde 45. Puis la corde 7 est enroulée dans le sens anti-horaire partiellement dans une gorge 42. Ainsi la fixation de la corde 7 à la roue d'entrainement 4 est réalisée et le nœud 71 permet de retenir la corde.

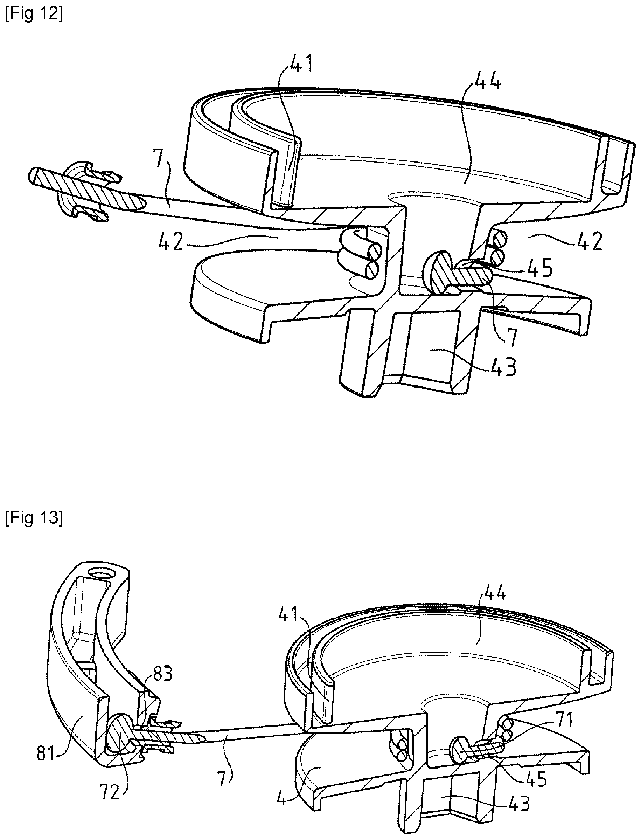

La figure 12 est une vue en coupe et en perspective de la roue d'entrainement, de la corde et du guide corde du dispositif de la figure 4. La seconde étape de montage du dispositif est l'enfilage du guide corde sur la corde par l'autre extrémité de la corde (celle sans le nœud 71) de la même manière que l'enfilage d'une perle sur un collier. Le guide corde est inséré sur la corde de manière à positionner le rebord 91 antérieur du côté de la poignée et le rebord 92 postérieur du côté de l'axe de rotation A.

La figure 13 est une vue en coupe et en perspective de la roue d'entrainement, de la corde, du guide corde et d'une partie de la poignée du dispositif de la figure 4. La troisième étape de montage du dispositif est l'enfilage de l'autre extrémité de la corde dans le trou de corde 83 de la base 81 de la poignée 8. Puis un second nœud 72 est formé à l'autre extrémité de la corde 7. Le nœud 72 est logé dans la base 81. La taille et l'encombrement du nœud sont dimensionnés pour être logé dans la base 81 et retenu par le trou de corde 83.

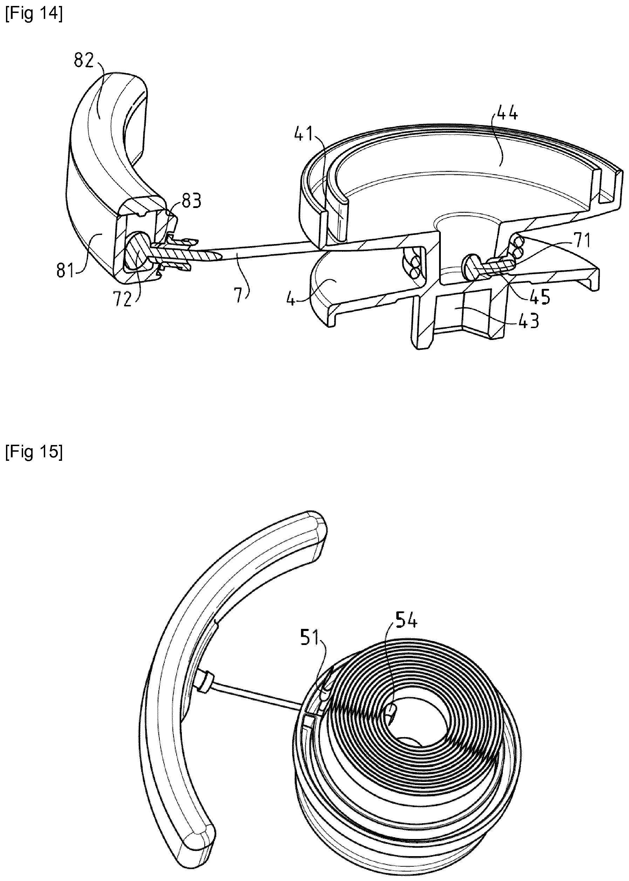

La figure 14 est une vue en coupe et en perspective de la roue d'entrainement, de la corde, du guide corde et de la poignée du dispositif de la figure 4. La quatrième étape de montage du dispositif est l'assemblage du capot 82 de la poignée sur la base 81 afin de réaliser la poignée 8. L'assemblage peut se faire par différents moyens, comme par exemple par collage, emboîtement ou vissage.

La figure 15 est une vue en perspective de la roue d'entrainement, de la corde, du guide corde, de la poignée et du ressort de rappel avec ses points de fixation du dispositif de la figure 4. La cinquième étape de montage du dispositif est le positionnement du ressort 5 de rappel dans la cavité 44. Un premier point d'ancrage 41 localisé sur la cavité 44 de la roue 4 immobilise l'extrémité externe 51 du ressort 5 de rappel. Le premier point d'ancrage 41 est une section du bord de la cavité 44 et permet de fixer le ressort par son extrémité externe, qui est repliée sur elle-même de manière à former un point de fixation localisé à la première extrémité 51 du ressort 5 de rappel.

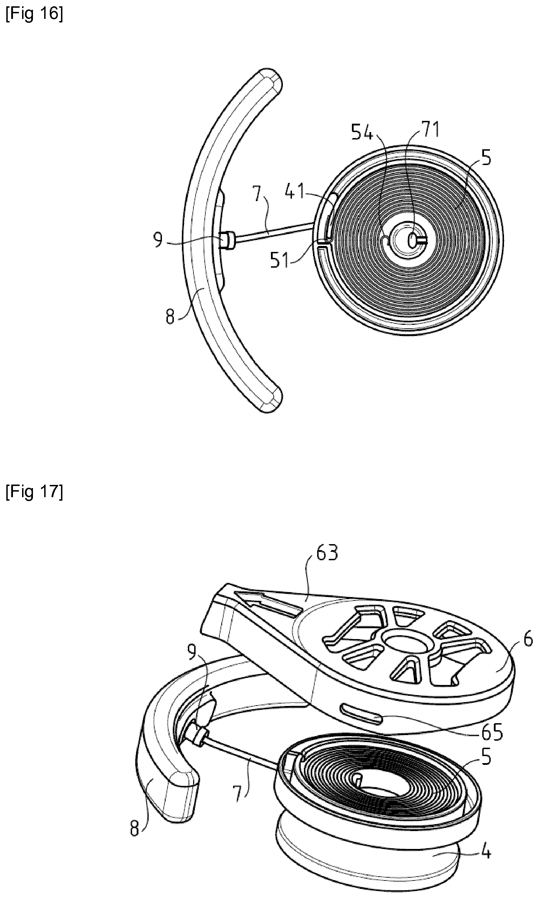

La figure 16 est une vue de dessus de la figure 15 où le ressort 5 de rappel est positionné dans la cavité 44 de la roue 4 et le premier point d'ancrage 41 de la roue 4 coopère avec la première extrémité 51 du ressort 5 de rappel.

La figure 17 est une vue en perspective de la roue d'entrainement, de la corde, du guide corde, de la poignée, du ressort 5 de rappel et du capot de guidage du dispositif de la figure 4. La sixième étape de montage du dispositif est le positionnement du capot de guidage 6. Cette étape vient positionner le second point d'ancrage 64 (visible sur la figure 6) du capot de guidage 6 sur la seconde extrémité 54 du ressort 5 de rappel. Le second point d'ancrage 64 est une section du bord de l'axe central du capot de guidage 6 et permet de fixer le ressort par son extrémité interne, qui est repliée sur elle-même de manière à former un point de fixation. A partir du point de fixation 51, le ressort est enroulé dans le sens horaire. Ainsi fixé le ressort 5 de rappel pourra emmagasiner de l'énergie lorsqu'il est tendu ou sous tension, et la restituer par l'intermédiaire de la roue d'entrainement 4 lors de la détente (restitution du couple). L'énergie restituée est généralement transmise à l'unité de travail 2.

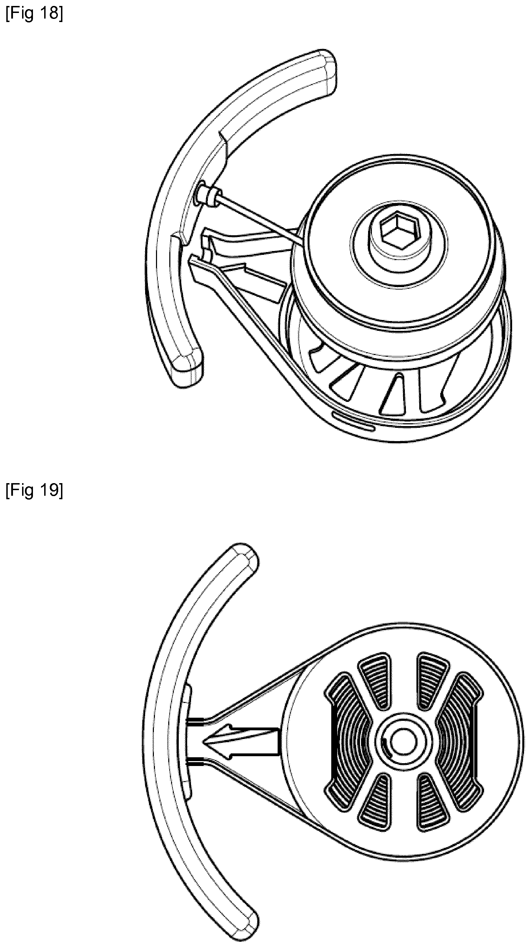

La figure 18 est une vue en perspective de dessous du dispositif de la figure 17.

La septième étape de montage du dispositif est la mise sous tension du ressort 5 de rappel. Elle s'effectue par l'opérateur qui enroule la corde totalement dans la gorge 42 de la roue 4, puis entraine l'ensemble corde et roue sur 2 tours supplémentaires. Ainsi cela permet de mettre en tension le ressort lié à la roue 4 par l'extrémité 51, puis on positionne le guide corde 9 dans le logement 62, pour maintenir la tension du ressort. Une fois l'ensemble sous tension, le dispositif est en phase de repos.

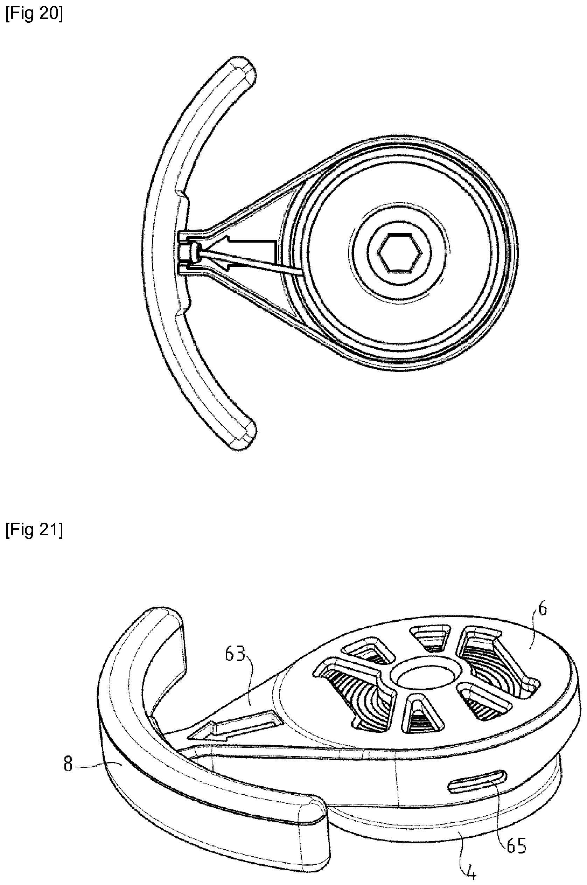

La figure 19 est une vue de dessus et la figure 20 est une vue de dessous du dispositif dont le montage est terminé. Le montage du dispositif est terminé à cette étape. Le dispositif est prêt à fonctionner.

La figure 21 est une vue en perspective du dispositif dont le montage est terminé. Ce dispositif 1 est prêt à être installé entre les parties 11 et 12 pour former le couvercle 10.

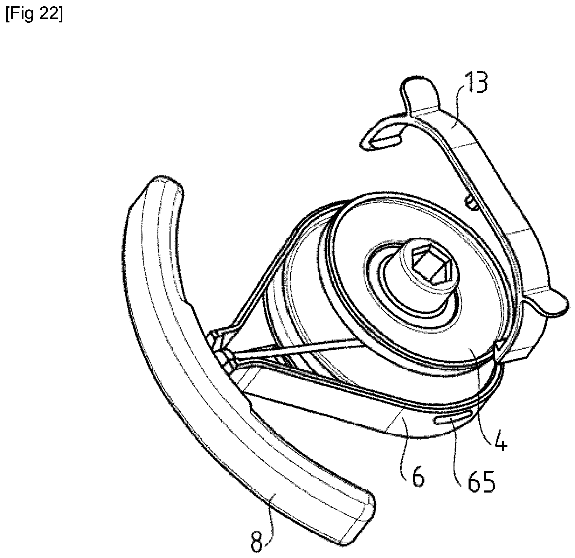

La figure 22 est une vue en perspective du dispositif dont le montage est terminé avec une bride de maintien 13. La bride de maintien 13 permet de maintenir l'ensemble des pièces du dispositif. Elle se fixe sur des encoches 65 localisées sur les parois verticales du capot de guidage 6 et sur l'espace 43 (également visible sur la figure 8) de la roue 4. La bride de maintien 13 coopère avec les encoches 65 et l'espace 43. La bride de maintien permet la manipulation, le stockage et/ou le transport du dispositif 1 sans risque de voir les différentes pièces se désassembler.

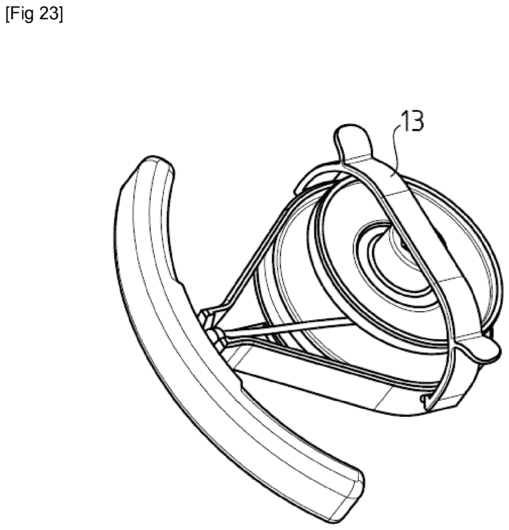

La figure 23 est une vue en perspective du dispositif dont le montage est terminé avec sa bride de maintien maintenant le dispositif.

Bien que l'invention ait été décrite en liaison avec des exemples particuliers de réalisation et d'application, il est bien évident qu'elle n'y est nullement limitée.

Des modifications restent possibles, notamment du point de vue de l'agencement et de la constitution des différents éléments ou par substitution d'équivalents techniques, sans sortir pour autant du domaine de protection de l'invention, tel que défini dans les revendications.

## Revendications

1. Couvercle (10) d'appareil culinaire comprenant une partie supérieure (11), une partie inférieure (12), et un dispositif (1) d'entrainement à corde, le dispositif (1) d'entraînement à corde étant destiné à mettre manuellement en rotation une unité de travail (2) autour d'un axe de rotation par traction d'une corde transversalement à l'axe de rotation A, le dispositif (1) d'entraînement à corde comprenant une roue d'entrainement (4), un ressort (5) de rappel, un capot de guidage (6), le tout disposé coaxialement par rapport à l'axe de rotation A, une corde (7) dont une extrémité est enroulée autour de la roue d'entrainement (4) et dont l'autre extrémité est reliée à une poignée (8), un élément (63) de déportation disposé transversalement par rapport à l'axe de rotation, et un guide corde (9) agencé sur le capot de guidage (6), le capot de guidage (6) comprenant l'élément (63) de déportation pour éloigner la poignée (8) et mettre sous tension la corde (7) dans une direction radiale par rapport à l'axe de rotation A,
**caractérisé en ce que** le guide corde (9) est amovible et **en ce que** le dispositif (1) d'entrainement à corde est un dispositif d'entraînement à corde autonome disposé coaxialement par rapport à l'axe de rotation A entre la partie supérieure (11) et la partie inférieure (12).

2. Couvercle (10) d'appareil culinaire selon la revendication 1 **caractérisé en ce que** le capot de guidage (6) comprend une butée d'arrêt (61) de la poignée (8).

3. Couvercle (10) d'appareil culinaire selon l'une quelconque des revendications 1 à 2 **caractérisé en ce que** le guide corde (9) est agencé sur le capot de guidage (6) dans un logement (62) du capot de guidage (6).

4. Couvercle (10) d'appareil culinaire selon l'une quelconque des revendications 1 à 3 **caractérisé en ce que** la poignée (8) est en contact seulement avec le guide corde (9) et/ou avec la butée d'arrêt (61) en phase de repos du dispositif (1)d'entrainement.

5. Couvercle (10) d'appareil culinaire selon la revendication 2 **caractérisé en ce que** le guide corde (9) forme une pièce distincte de la butée d'arrêt (61).

6. Couvercle (10) d'appareil culinaire selonla revendication 3, **caractérisé en ce que** le guide corde (9) n'est pas solidaire du capot de guidage (6) et peut être inséré ou retiré dans le logement (62) du capot de guidage (6) par simple pression.

7. Couvercle (10) d'appareil culinaire selon l'une quelconque des revendications 1 à 6 **caractérisé en ce que** le capot de guidage (6) et l'élément (63) de déportation ne forment qu'une seule pièce.

8. Couvercle (10) d'appareil culinaire selon la revendication 2 ou 5, **caractérisé en ce que** la butée d'arrêt (61) fait partie de l'élément (63) de déportation.

9. Couvercle (10) d'appareil culinaire selon l'une quelconques des revendications 1 à 8, **caractérisé en ce que** la roue d'entrainement (4) comprend un premier point d'ancrage (41) d'une première extrémité (51) du ressort (5).

10. Couvercle (10) d'appareil culinaire selon la revendication 9 **caractérisé en ce que** le capot de guidage (6) comprend un second point d'ancrage (64) d'une seconde extrémité (54) du ressort (5).

11. Couvercle (10) d'appareil culinaire selon l'une quelconque des revendications 1 à 10, **caractérisé en ce que** la roue d'entrainement (4) comprend une gorge (42) pour recevoir la corde (7).

12. Couvercle (10) d'appareil culinaire selon l'une quelconque des revendications 1 à 11, caractériséen ce que la roue d'entrainement (4) est mobile en rotation par rapport au capot de guidage (6).

13. Couvercle (10) d'appareil culinaire selon l'une quelconque des revendications 1 à 12, **caractérisé en ce que** la roue d'entrainement (4) comprend un espace (43) du côté inférieur pour la réception par accouplement mécanique de l'unité de travail (2) afin de transmettre le mouvement de rotation.

14. Couvercle (10) d'appareil culinaire selon la revendication 13, **caractérisé en ce que** l'espace (43) du côté inférieur de la roue d'entrainement (4) présente une section de forme hexagonale.

15. Appareil culinaire (3) comprenant un couvercle (10) selon l'une quelconque des revendications 1 à 14.

## Patentansprüche

1. Deckel (10) für ein Küchengerät, umfassend ein oberes Teil (11), ein unteres Teil (12) und eine Seilantriebsvorrichtung (1), wobei die Seilantriebsvorrichtung (1) dazu bestimmt ist, durch Ziehen eines Seils quer zur Drehachse A eine Arbeitseinheit (2) von Hand um eine Drehachse herum zur Drehung zu bringen, wobei die Seilantriebsvorrichtung (1) ein Antriebsrad (4), eine Rückstellfeder (5), eine Führungshaube (6), wobei die Gesamtheit in Bezug auf die Drehachse A koaxial angeordnet ist, ein Seil (7), von dem ein Ende um das Antriebsrad (4) herum gewickelt ist und von dem das andere Ende mit einem Griff (8) verbunden ist, ein Verschiebungselement (63), das in Bezug auf die Drehachse quer angeordnet ist, und eine Seilführung (9) umfasst, die auf der Führungshaube (6) angebracht ist, wobei die Führungshaube (6) das Verschiebungselement (63) umfasst, um den Griff (8) wegzuziehen und das Seil (7) in einer in Bezug auf die Drehachse A radialen Richtung zu spannen,
**dadurch gekennzeichnet, dass** die Seilführung (9) herausnehmbar ist, und dadurch, dass die Seilantriebsvorrichtung (1) eine autonome Seilantriebsvorrichtung ist, die in Bezug auf die Drehachse A zwischen dem oberen Teil (11) und dem unteren Teil (12) koaxial angeordnet ist.

2. Deckel (10) für ein Küchengerät nach Anspruch 1, **dadurch gekennzeichnet, dass** die Führungshaube (6) einen Endanschlag (61) des Griffs (8) umfasst.

3. Deckel (10) für ein Küchengerät nach einem der Ansprüche 1 bis 2, **dadurch gekennzeichnet, dass** die Seilführung (9) auf der Führungshaube (6) in einer Unterbringung (62) der Führungshaube angebracht ist.

4. Deckel (10) für ein Küchengerät nach einem der Ansprüche 1 bis 3, **dadurch gekennzeichnet, dass** der Griff (8) nur in einer Ruhephase der Antriebsvorrichtung (1) mit der Seilführung (9) und/oder dem Endanschlag (61) in Kontakt vorliegt.

5. Deckel (10) für ein Küchengerät nach Anspruch 2, **dadurch gekennzeichnet, dass** die Seilführung (9) ein von dem Endanschlag (61) separates Stück bildet.

6. Deckel (10) für ein Küchengerät nach Anspruch 3, **dadurch gekennzeichnet, dass** die Seilführung (9) mit der Führungshaube (6) nicht einstückig ist und in die Unterbringung (62) der Führungshaube (6) durch einfaches Drücken eingesetzt oder herausgezogen werden kann.

7. Deckel (10) für ein Küchengerät nach einem der Ansprüche 1 bis 6, **dadurch gekennzeichnet, dass** die Führungshaube (6) und das Verschiebungselement (63) nur ein einziges Stück bilden.

8. Deckel (10) für ein Küchengerät nach Anspruch 2 oder 5, **dadurch gekennzeichnet, dass** der Endanschlag (61) ein Teil des Verschiebungselement (63) ausmacht.

9. Deckel (10) für ein Küchengerät nach einem der Ansprüche 1 bis 8, **dadurch gekennzeichnet, dass** das Antriebsrad (4) einen ersten Verankerungspunkt (41) eines ersten Endes (51) der Feder (5) umfasst.

10. Deckel (10) für ein Küchengerät nach Anspruch 9, **dadurch gekennzeichnet, dass** die Führungshaube (6) einen zweiten Verankerungspunkt (64) eines zweiten Endes (54) der Feder (5) umfasst.

11. Deckel (10) für ein Küchengerät nach einem der Ansprüche 1 bis 10, **dadurch gekennzeichnet, dass** das Antriebsrad (4) eine Ausnehmung (42) zum Aufnehmen des Seils (7) umfasst.

12. Deckel (10) für ein Küchengerät nach einem der Ansprüche 1 bis 11, **dadurch gekennzeichnet, dass** das Antriebsrad (4) in Bezug auf die Führungshaube (6) drehbeweglich ist.

13. Deckel (10) für ein Küchengerät nach einem der Ansprüche 1 bis 12, **dadurch gekennzeichnet, dass** das Antriebsrad (4) einen Raum (43) an der unteren Seite für die Aufnahme der Arbeitseinheit (2) durch mechanische Kopplung umfasst, um die Drehbewegung zu übertragen.

14. Deckel (10) für ein Küchengerät nach Anspruch 13, **dadurch gekennzeichnet, dass** der Raum (43) an der unteren Seite des Antriebsrads (4) einen hexagonal verformten Abschnitt aufweist.

15. Küchengerät (3), umfassend einen Deckel (10) nach einem der Ansprüche 1 bis 14.

## Claims

1. Lid (10) of a culinary appliance comprising a top part (11), a bottom part (12), and a string drive device (1), the string drive device (1) being intended to set a working unit (2) manually in rotation about an axis of rotation by pulling a string transversely to the axis of rotation A, the string drive device (1) comprising a drive wheel (4), a return spring (5), a guide cover (6), the whole being disposed coaxially with respect to the axis of rotation A, a string (7), one end of which is wound around the drive wheel (4) and the other end of which is connected to a handle (8), a displacement element (63) disposed transversely with respect to the axis of rotation, and a string guide (9) arranged on the guide cover (6), the guide cover (6) comprising the displacement element (63) for moving the handle (8) away and tensioning the string (7) in a radial direction with respect to the axis of rotation A,
**characterised in that** the string guide (9) is removable and **in that** the string drive device (1) is an autonomous string drive device disposed coaxially with respect to the axis of rotation A between the top part (11) and the bottom part (12).

2. Lid (10) of a culinary appliance according to claim 1, **characterised in that** the guide cover (6) comprises a stop (61) for the handle (8).

3. Lid (10) of a culinary appliance according to any one of claims 1 to 2, **characterised in that** the string guide (9) is arranged on the guide cover (6) in a housing (62) of the guide cover (6).

4. Lid (10) of a culinary appliance according to any one of claims 1 to 3, **characterised in that** the handle (8) is in contact only with the string guide (9) and/or with the stop (61) in the resting phase of the drive device (1).

5. Lid (10) of a culinary appliance according to claim 2, **characterised in that** the string guide (9) forms a part which is separate from the stop (61).

6. Lid (10) of a culinary appliance according to claim 3, **characterised in that** the string guide (9) is not secured to the guide cover (6) and can be inserted into or removed from the housing (62) of the guide cover (6) simply by pressing.

7. Lid (10) of a culinary appliance according to any one of claims 1 to 6, **characterised in that** the guide cover (6) and the displacement element (63) form only one piece.

8. Lid (10) of a culinary appliance according to claim 2 or 5, **characterised in that** the stop (61) is part of the displacement element (63).

9. Lid (10) of a culinary appliance according to any one of claims 1 to 8, **characterised in that** the drive wheel (4) comprises a first anchoring point (41) for a first end (51) of the return spring (5).

10. Lid (10) of a culinary appliance according to claim 9, **characterised in that** the guide cover (6) comprises a second anchoring point (64) for a second end (54) of the return spring (5).

11. Lid (10) of a culinary appliance according to any one of claims 1 to 10, **characterised in that** the drive wheel (4) comprises a groove (42) for receiving the string (7).

12. Lid (10) of a culinary appliance according to any one of claims 1 to 11, **characterised in that** the drive wheel (4) is rotatably movable with respect to the guide cover (6).

13. Lid (10) of a culinary appliance according to any one of claims 1 to 12, **characterised in that** the drive wheel (4) comprises a space (43) on the underside for receiving the working unit (2) by mechanical coupling in order to transmit the rotary movement.

14. Lid (10) of a culinary appliance according to claim 13, **characterised in that** the space (43) on the underside of the drive wheel (4) has a hexagonal deformed cross-section.

15. Culinary appliance (3) comprising a lid (10) according to any one of claims 1 to 14.
